# EUROPÄISCHE PATENTSCHRIFT

(11) **EP 2 589 843 B1**
(45) Veröffentlichungstag und Bekanntmachung des Hinweises auf die Patenterteilung: **25.03.2015**
(21) Anmeldenummer: 12190761.2
(22) Anmeldetag: 31.10.2012
(51) Int. Cl.: F16K 27/00, F16K 27/02

(54) **Gehäuseformling für ein Heizungsventil**
Housing blank for a heater valve
Pièce brute de boîtier pour une soupape de chauffage

(30) Priorität: 02.11.2011 DE 202011051835 U
(43) Veröffentlichungstag der Anmeldung: 08.05.2013
(73) Patentinhaber: U.S.H.-Innovationen GmbH, 33758 Schloss Holte-Stukenbrock (DE)
(72) Erfinder: Schröder, Ulrich, 33415 Verl (DE); Henkenjohann, Walter, 33415 Verl (DE)
(74) Vertreter: Ter Meer Steinmeister & Partner

(56) Entgegenhaltungen:
- EP-A1- 1 810 764
- DE-B3- 10 307 359
- DE-C1- 4 306 610
- DE-U1-202005 001 940
- US-A- 5 746 170
- US-A1- 2005 140 095
- US-A1- 2006 108 435

## Beschreibung

Die Erfindung betrifft einen Gehäuseformling für ein Heizungsventil, mit zwei parallelen Ästen, die jeweils an einem Ende einen Anschluss für ein Heizungsrohr und am anderen Ende einen Hilfsanschluss aufweisen, und mit einem Balken, der die beiden Äste in der Form eines H verbindet und einen Ventilsitz sowie eine Aufnahme für einen Ventilkopf bildet, der rechtwinklig zu einer in Längsrichtung des Balkens verlaufenden Achse von dem Gehäuseformling vorspringt.

Aus EP 1 469 366 B1 ist ein Heizungsventil für Fußbodenheizungen bekannt, bei dem ein Raumthermostatventil und ein Rücklauftemperaturbegrenzer in einem gemeinsamen Ventilgehäuse der oben genannten Art kombiniert sind. Das Ventil wird üblicherweise so an einer Wand montiert, beispielsweise in einem Unterputzkasten, dass der Balken horizontal verläuft und die beiden Äste vertikal verlaufen, wobei die unteren Enden die Anschlüsse für die Heizungsrohre bilden. In einer Konfiguration weist der Ventilkopf nach vom in den Raum. In einer anderen Konfiguration kann er senkrecht nach oben weisen. Die beiden nach oben weisenden Hilfsanschlüsse können beispielsweise für ein Entlüftungsventil oder einen Durchflussmengenmesser genutzt werden. Außerdem ermöglichen es diese Hilfsanschlüsse, die ihnen gegenüberliegenden Anschlüsse selektiv mit Hilfe eines Stopfens zu verschließen, um verschiedene Teile der Heizungsanlage auf Dichtheit zu prüfen. Üblicherweise haben die Hilfsanschlüsse etwas kleinere Innenquerschnitte als die Anschlüsse.

Der Ventilsitz definiert eine bevorzugte Durchflussrichtung, in der sichergestellt ist, dass es nicht aufgrund hydrodynamischer Effekte zu einem Schlagen des Ventils kommt. Das Ventil sollte deshalb stets so angeschlossen werden, dass einer der beiden Anschlüsse immer als Einlass und der andere immer als Auslass genutzt wird.

Je nach Konfiguration der Heizungsanlage kann es dann jedoch vorkommen, dass die an den Einlass und den Auslass anzuschließenden Heizungsrohre einander kreuzen müssen, was eine kompakte Unterputzinstallation zumindest erschwert. Wenn der Ventilkopf nach oben weist, kann man das Ventilgehäuse einfach umdrehen, um die Positionen von Einlass und Auslass zu vertauschen und so eine Überkreuzung der Heizungsrohre zu vermeiden. Wenn jedoch der Ventilkopf waagerecht vom Balken abgeht, ist dies nicht möglich, da sonst der Ventilkopf nicht in den Raum sondern zur Wand weisen würde.

Bei dem bekannten Heizungsventil wird dieses Problem dadurch gelöst, dass der mittlere Teil des Balkens drehbar ausgebildet ist. Wenn die Positionen von Einlass und Auslass vertauscht werden müssen, wird das Ventilgehäuse einfach um seine vertikale Achse gedreht, und zusätzlich wird der Mittelteil des Balkens um 180° um seine Längsachse gedreht, so dass der Ventilkopf wieder in die richtige Richtung weist. Außerdem lässt sich der Ventilkopf durch eine Drehung um 90° in eine nach oben weisende Position bringen.

Das bekannte Heizungsventil ist jedoch verhältnismäßig kostspielig, da zwei flüssigkeitsdichte Drehkupplungen benötigt werden.

Aus US 2006/108435 A1 ist ein Bypassventil für Heizungen mit H-förmig angeordneten, zueinander symmetrischen Anschlüssen bekannt, bei dem der Ventilkopf koaxial mit dem Balken des H ausgerichtet ist.

Aufgabe der Erfindung ist es, einen Gehäuseformling für ein kostengünstigeres Heizungsventil zu schaffen, das dennoch unterschiedliche Installationsweisen ermöglicht. Diese Aufgabe wird erfindungsgemäß dadurch gelöst, dass die Anschlüsse und Hilfsanschlüsse eine 180°-Drehsymmetrie bezüglich einer Achse aufweisen, die rechtwinklig zur Ebene des H durch die Mitte des Balkens verläuft.

Obgleich der Gehäuseformling starr und in einem Stück ausgebildet ist, besteht auch hier die Möglichkeit, die Positionen von Einlass und Auslass zu vertauschen. Dazu wird das Ventilgehäuse um 180° um die rechtwinklig zur Ebene des H verlaufenden Achse gedreht, so dass die Anschlüsse, die bisher den Einlass und den Auslass gebildet haben, jeweils auf die andere Seite des Ventils gelangen und nun allerdings nach oben weisen, während die bisher nach oben weisenden Hilfsanschlüsse jetzt nach unten weisen. Aufgrund der Symmetrie des Gehäuseformlings ist es jedoch möglich, die bisherigen Hilfsanschlüsse als Einlass und Auslass zu nutzen, während die bisherigen Ein- und Auslässe die Hilfsanschlüsse bilden.

Vorteilhafte Ausgestaltungen und Weiterbildungen der Erfindung sind in den Unteransprüchen angegeben.

In einer bevorzugten Ausführungsform bildet der Gehäuseformling an jedem Ende des Balkens einen Anschlussteil, der eine 90°-Drehsymmetrie bezüglich der Längsachse des Balkens aufweist und vier geschlossene Anschlussflächen bildet. Eine dieser Anschlussflächen weist in die Richtung, in die der Ventilkopf vom Balken abgeht, eine andere Anschlussfläche weist in die entgegengesetzte Richtung, und die beiden übrigen Anschlussflächen weisen in die dazu rechtwinkligen Richtungen. Wenn der Ventilkopf nach oben weisen soll, kann man die beiden erstgenannten Anschlussflächen aufbohren, um den Einlass bzw. den Auslass und den gegenüberliegenden Hilfsanschluss zu bilden. Wenn der Ventilkopf waagerecht orientiert sein soll, werden die beiden anderen Anschlussflächen aufgebohrt. Auf diese Weise wird nur ein einziges Formwerkzeug benötigt, um identische Gehäuseformlinge herzustellen, die sich je nach Bohrmuster wahlweise für ein Heizungsventil mit nach oben weisenden Ventilkopf oder für ein Heizungsventil mit waagerecht orientiertem Ventilkopf nutzen lassen, wobei die Bohrungen gleiche Durchmesser haben können, so dass auch hier die Möglichkeit besteht, die Positionen von Einlass und Auslass zu vertauschen.

Im folgenden werden Ausführungsbeispiele anhand der Zeichnung näher erläutert.

Es zeigen:
- Fig. 1: eine Frontansicht durch einen Gehäuseformling für ein Heizungsventil gemäß einer Ausführungsform der Erfindung;
- Fig. 2: einen Schnitt längs der Linie II-II in Fig. 1;
- Fig. 3: eine Frontansicht eines Gehäuseformlings gemäß einem anderen Ausführungsbeispiel;
- Fig. 4: eine Seitenansicht des Gehäuseformlings nach Fig. 3; und
- Fig. 5 und 6: Ansichten analog zu Fig. 3 und 4 für eine um 90° gedrehte Position des Gehäuseformlings.

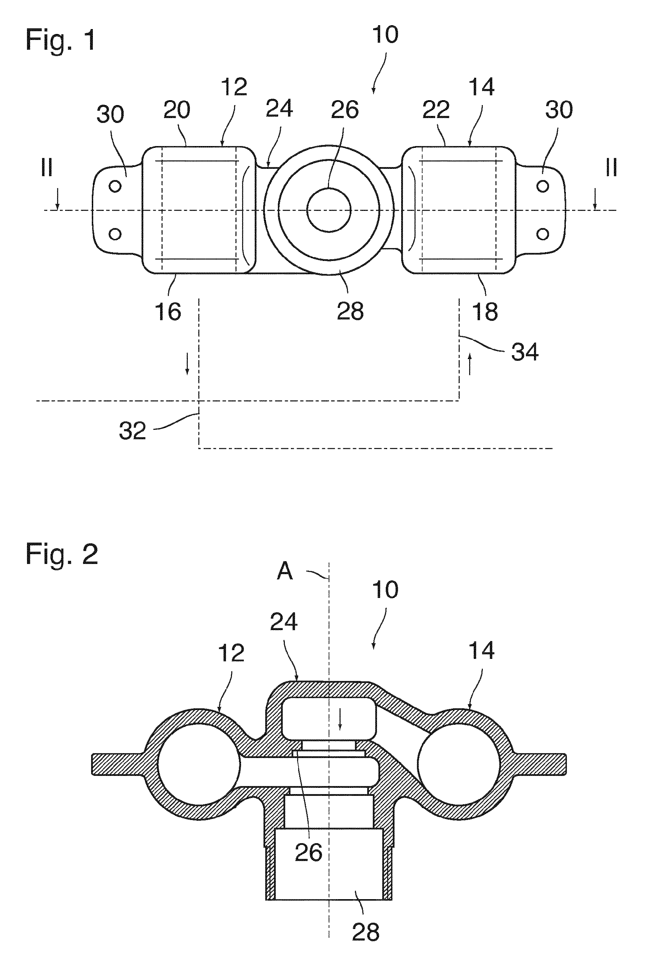

In Fig. 1 ist ein Gehäuseformling 10 für ein Heizungsventil in einer typischen Einbauposition gezeigt. Der Gehäuseformling weist zwei parallele, vertikal orientierte Äste 12, 14 auf, von denen jeder am unteren Ende einen Anschluss 16 bzw. 18 und am oberen Ende einen Hilfsanschluss 20 bzw. 22 bildet. Durch einen waagerecht orientierten Balken 24 sind die beiden Äste 12 und 14 so miteinander verbunden, dass sich insgesamt die Konfiguration eines H ergibt. Der Balken 24 bildet einen Ventilsitz 26 sowie eine Aufnahme 28 für einen Ventilkopf, beispielsweise einen Kombiventilkopf der sowohl die Funktion eines Raumthermostatventils als auch die Funktion eines Rücklauftemperaturbegrenzers hat.

Im gezeigten Beispiel ist die Aufnahme 28 dem Betrachter zugewandt, so dass der in diese Aufnahme einzusetzende Ventilkopf waagerecht in den Raum ragen würde, wenn das Ventilgehäuse an einer Wand befestigt ist.

Auf der Außenseite jedes der beiden Äste 12, 14 weist der Gehäuseformling 10 eine flache Befestigungslasche 30 auf, die in der Ebene des H liegt und es erlaubt, das Ventilgehäuse an einer Wandhalterung oder in einem entsprechend gestalteten Unterputzkasten zu befestigen.

An den Anschluss 16 ist ein Heizungsrohr 32 angeschlossen, das in Fig. 1 nur strichpunktiert angedeutet ist. Entsprechend ist an den Anschluss 18 ein weiteres Heizungsrohr 34 angeschlossen.

Wie in der Schnittdarstellung in Fig. 2 zu erkennen ist, liegt der Ventilsitz 26 der Aufnahme 28 gegenüber, so dass ein nicht gezeigtes Ventilglied, das aus dem in der Aufnahme 28 gehaltenen Ventilkopf ausgefahren wird, sich gegen den Ventilsitz 26 legen kann. Das Heizungsventil sollte stets so angeschlossen werden, dass das Medium in der in Fig. 2 durch einen Pfeil angegebenen Richtung durch den Ventilsitz 26 strömt, also so, dass der dynamische Druck des Mediums in Öffnungsrichtung des Ventilgliedes wirkt. Bei entgegengesetzter Durchflussrichtung könnte es aufgrund hydrodynamischer Effekte leicht zu einem Schlagen des Ventils kommen. Das Heizungsventil sollte deshalb so in den Rücklauf der Heizungsanlage integriert werden, dass der Anschluss 18 den Einlass des Ventils bildet und der Anschluss 16 den Auslass. Dabei kann die in Fig. 1 illustrierte, im allgemeinen unerwünschte Situation eintreten, dass die Heizungsrohre 32, 34 einander kreuzen müssen.

Die Besonderheit des hier gezeigten Gehäuseformlings 10 besteht darin, dass er eine 180°-Drehsymmetrie bezüglich einer Achse A (Fig. 2) aufweist, die rechtwinklig zur Ebene des H durch die Mitte des Balkens 24 verläuft. In Fig. 1 verläuft diese Achse senkrecht zur Zeichenebene durch die Mitte des Ventilsitzes 26. Die erwähnte Drehsymmetrie bedeutet, dass der Anschluss 18 mit dem Hilfsanschluss 20 formidentisch ist und der Anschluss 16 mit dem Hilfsanschluss 14. Wenn das Heizungsventil um 180° um die Achse A gedreht wird, können daher die Anschlüsse 16 und 18 ihre Funktionen mit den Funktionen der Hilfsanschlüsse 20 und 22 tauschen. Gleichzeitig wird durch diese Drehung erreicht, dass sich die bevorzugte Durchflussrichtung des Ventils umkehrt, d.h., der bisherige Hilfsanschluss 14, der dann den Einlass bildet, liegt auf der entgegengesetzten Seite (links in Fig. 1), während der Hilfsanschluss 20, der nun den Auslass bildet, auf der rechten Seite liegt. Das hat zur Folge, dass die Heizungsrohre 32 und 34 einander nicht mehr zu kreuzen brauchen.

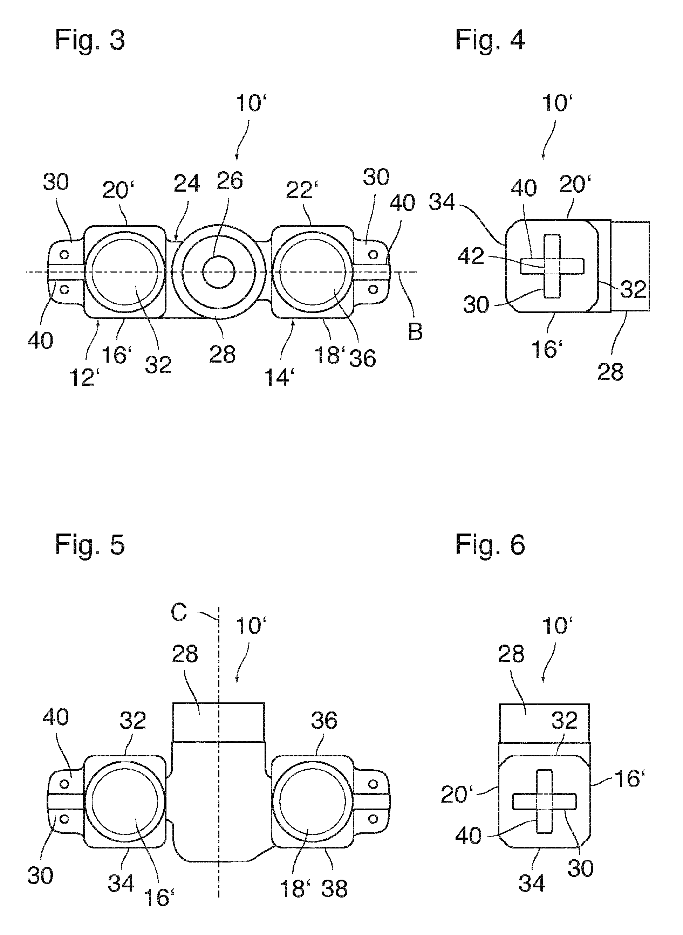

Fig. 3 bis 6 zeigen einen Gehäuseformling 10' gemäß einem anderen Ausführungsbeispiel. In Fig. 3 ist der Gehäuseformling 10' in der gleichen Position gezeigt wie der Gehäuseformling 10 in Fig. 1. An den entgegengesetzten Enden des Balkens 24 bildet der Gehäuseformling 10' Anschlussabschnitte 12' und 14'. Der Anschlussabschnitt 12' ebenso wie in Fig. 1 einen Anschluss und einen Hilfsanschluss, die allerdings noch durch Anschlussflächen 16' und 20' verschlossen sind. Entsprechend hat der Anschlussabschnitt 14' geschlossene Anschlussflächen 18' und 22'. Um aus dem Gehäuseformling 10' ein gebrauchsfertiges Ventilgehäuse zu machen, müssen die Anschlussflächen aufgebohrt und mit einem Gewinde oder einem Stecksystem versehen werden.

Der Anschlussabschnitt 12' hat jedoch noch zwei zusätzliche Anschlussflächen 32 und 34. Die Anschlussfläche 32 ist in Fig. 3 dem Betrachter zugewandt. Die Anschlussfläche 34 liegt der Anschlussfläche 32 gegenüber und ist deshalb in Fig. 3 nicht sichtbar. Sie ist aber in der Seitenansicht in Fig. 4 zu erkennen. Mit seinen vier Anschlussflächen 16', 20', 32 und 34 weist der Anschlussabschnitt 12' eine 90°-Drehsymmetrie bezüglich einer Achse B auf, die in Längsrichtung des Balkens 24 und durch die Mitte dieses Balkens verläuft. Entsprechend weist auch der Anschlussabschnitt 18' vier drehsymmetrische Anschlussflächen 18', 22', 36 und 38 auf (die Anschlussfläche 38 ist nur in Fig. 5 zu erkennen).

Zusätzlich zu den Befestigungslaschen 30 weist der Gehäuseformling 10' an jedem Ende eine weitere Befestigungslasche 40 auf, die die dortige Befestigungslasche 30 rechtwinklig kreuzt. Wenn aus dem Gehäuseformling 10' ein Ventilgehäuse gemacht werden soll, das dieselbe Konfiguration wie das Ventilgehäuse in Fig. 1 hat, so werden die zusätzlichen Befestigungslaschen 40 weggefräst oder an Sollbruchstellen 42 weggebrochen, damit man die Befestigungslaschen 30 zur Befestigung des Ventilgehäuses nutzen kann.

Mit dem Gehäuseformling 10' lässt sich wahlweise jedoch auch die in Fig. 5 und 6 gezeigte Ventilkonfiguration verwirklichen, bei der die Aufnahme 28 für den Ventilkopf in der Ebene des H liegt und ebenso wie die Hilfsanschlüsse nach oben weist. In diesem Fall werden die Anschlussflächen 34 und 38 aufgebohrt, um die nach unten weisenden Anschlüsse für den Einlass und den Auslass zu bilden, und die Anschlussflächen 32 und 36 werden aufgebohrt, um die nach oben weisenden Hilfsanschlüsse zu bilden. Außerdem werden nun die Befestigungslaschen 30 weggebrochen damit die Befestigungslaschen 40 zur Befestigung des Ventilgehäuses genutzt werden können. Einlass und Auslass lassen sich in dieser Konfiguration einfach dadurch vertauschen, dass das Ventilgehäuse um die in Fig. 5 eingezeichnete Achse C gedreht wird.

## Patentansprüche

1. Gehäuseformling für ein Heizungsventil, mit zwei parallelen Ästen (12, 14), die jeweils an einem Ende einen Anschluss (16, 18) für ein Heizungsrohr (32, 34) und am anderen Ende einen Hilfsanschluss (20, 22) aufweisen, und mit einem Balken (24), der die beiden Äste (12, 14) in der Form eines H miteinander verbindet und einen Ventilsitz (26) sowie eine Aufnahme (28) für einen Ventilkopf bildet, die rechtwinklig zu einer in Längsrichtung des Balkens (24) verlaufenden Achse (B) ist, so dass der in diese Aufnahme einzusetzende Ventilkopf vom dem Gehäuseförmling vorspringt, **dadurch gekennzeichnet, dass** die Anschlüsse (16, 18) und Hilfsanschlüsse (20, 22) eine 180°-Drehsymmetrie bezüglich einer Achse (A) aufweisen, die rechtwinklig zur Ebene des H durch die Mitte des Balkens (24) verläuft.

2. Gehäuseformling nach Anspruch 1, der an jedem Ende des Balkens (24) einen Anschlussabschnitt (12', 14') aufweist, der eine 90°-Drehsymmetrie bezüglich der in Längsrichtung des Balkens (24) durch dessen Mitte verlaufenden Achse (B) aufweist und vier geschlossene Anschlussflächen (16', 20', 32, 34; 14', 22', 36, 38) aufweist, von denen je eine (32, 36) in die gleiche Richtung weist wie die Aufnahme (28), und von denen je zwei gegenüberliegende aufzubohren sind, um die Anschlüsse (16, 18) und die Hilfsanschlüsse (20, 22) zu bilden.

3. Gehäuseformling nach Anspruch 2, bei dem jeder Anschlussabschnitt (12', 14') auf der Außenseite zwei einander rechtwinklig kreuzende Befestigungslaschen (30, 40) aufweist.

4. Gehäuseformling nach Anspruch 3, bei dem die Befestigungslaschen (30, 40) über Sollbruchstellen (42) miteinander und mit dem Anschlussabschnitt verbunden sind.

## Claims

1. A housing blank for a heating valve, comprising two parallel branches (12, 14) each of which has a connector (16, 18) for a heating pipe (32, 34) at one end and an auxiliary connector (20, 22) at the other end, the blank further comprising a cross-bar (24) that interconnects the two branches (12, 14) in a "H" configuration and forms a valve seat as well as a holder (28) for a valve head, the holder being orthogonal to an axis (B) that extends in longitudinal direction of the cross-bar (24), so that the valve head to be inserted into this holder projects from the housing blank, **characterized in that** the connectors (16, 18) and auxiliary connectors (20, 22) have a 180° rotational symmetry with respect to an axis (A) that extends normal to the plane of the "H" through the centre of the cross-bar (24).

2. The blank according to claim 1, having at each end of the cross-bar (24) a connection portion (12', 14') which has a 90° rotational symmetry with respect to said axis (B) that passes in longitudinal direction of the cross-bar (24) through the centre of the latter, the connection portion having four closed connection surfaces (16', 20', 32, 34; 14', 22', 36, 38), one of which (32, 36) respectively points in the same direction as the holder (28) and two of which are respectively arranged to be opened by boring in order to form the connectors (16, 18) and the auxiliary connectors (20, 22).

3. The blank according to claim 2, wherein each connection portion (12', 14') is formed on its outer side with two fastening tabs (30, 40) that cross each other at right angles.

4. The blank according to claim 3, wherein the fastening tabs (30, 40) are connected to one another and to the connection portion via predetermined breaking lines.

## Revendications

1. Ebauche de moulage de boîtier pour une soupape de chauffage, avec deux branches parallèles (12, 14), qui comprennent, à une extrémité, un raccord (16, 18) pour un tube de chauffage (32, 34) et, à l'autre extrémité, un raccord auxiliaire (20, 22), et avec une barre (24) qui relie entre elles les deux branches (12, 14) dans la forme d'un H et forme un siège de soupape (26) ainsi qu'un logement (28) pour une tête de soupape, qui est perpendiculaire à un axe (B) passant dans la direction longitudinale de la barre (24), de façon à ce que la tête de soupape à insérer dans ce logement dépasse de l'ébauche de moulage de boîtier,
**caractérisée en ce que** les raccords (16, 18) et les raccords auxiliaires (20, 22) présentent une symétrie de rotation à 180° par rapport à un axe (A), qui passe perpendiculairement au plan du H par le milieu de la barre (24).

2. Ebauche de moulage de boîtier selon la revendication 1, qui comprend, à chaque extrémité de la barre (24), une portion de raccord (12', 14'), qui présente une symétrie de rotation de 90° par rapport à l'axe (B) passant dans la direction longitudinale de la barre (24) par son milieu et quatre surfaces de raccords (16', 20', 32, 34 ; 14', 22', 36, 38) dont une (32, 36) est orientée dans la même direction que le logement (28) et dont deux opposées doivent être percées afin de former les raccords (16, 18) et les raccords auxiliaires (20, 22).

3. Ebauche de moulage de boîtier selon la revendication 2, dans laquelle chaque portion de raccord (12', 14') comprend, à l'extérieur, deux pattes de fixation (30, 40) se croisant à angle droit.

4. Ebauche de moulage de boîtier selon la revendication 3, dans laquelle les pattes de fixation (30, 40) sont reliées entre elles et avec la portion de raccord par l'intermédiaire de points de rupture prédéterminés (42).
